# EUROPÄISCHE PATENTSCHRIFT

(11) **EP 1 228 432 B1**
(45) Veröffentlichungstag und Bekanntmachung des Hinweises auf die Patenterteilung: **18.06.2008**
(21) Anmeldenummer: 00974452.5
(22) Anmeldetag: 25.10.2000
(51) Int. Cl.: G06F 12/02, G06F 9/46

(54) **VERFAHREN ZUR DYNAMISCHEN SPEICHERVERWALTUNG**
METHOD FOR DYNAMIC MEMORY MANAGEMENT
PROCEDE DE GESTION DYNAMIQUE DE MEMOIRE

(30) Priorität: 27.10.1999 DE 19951716
(43) Veröffentlichungstag der Anmeldung: 07.08.2002
(73) Patentinhaber: Dr. Johannes Heidenhain GmbH, 83292 Traunreut (DE)
(72) Erfinder: MÜHLBAUER, Gerhard, 83395 Freilassing (DE)
(86) Internationale Anmeldenummer: PCT/EP2000/010492
(87) Internationale Veröffentlichungsnummer: WO 2001/031454

(56) Entgegenhaltungen:
- EP-A- 0 844 564
- WO-A-00/05652
- US-A- 5 367 637
- US-A- 5 579 508
- US-A- 5 784 698

## Beschreibung

Die Erfindung betrifft ein Verfahren zur dynamischen Speicherverwaltung nach dem Oberbegriff des Anspruchs 1.

Aus der US 5,367,637 ist bekannt, bei einem Echtzeit-Computersystem für eine Speichervergabe zwei verschiedene Verfahren anzuwenden. Zusätzlich zu dem im Echtzeit-Computersystem vorhandenen Verfahren wird eine zusätzliche Ebene zwischen dem Anwendungsprogramm und dem Echtzeit-Computersystem vorgesehen, um eine sich selbst optimierende und effizientere Methode Speicher bereitzustellen zu realisieren. In der zusätzlichen Ebene wird eine schnelle Speichervergabe mittels eines Speicher-Pools realisiert, ohne aber zu garantieren, dass immer Speicher aus einem Speicher-Pool zugewiesen werden kann. Bei dem im Computersystem bereits vorhandenen Verfahren wird eine langsamere Methode angewendet, bei der garantiert ist, dass immer Speicher zugewiesen werden kann. In der zusätzlichen Ebene wird ein Pool aus Speicherblöcken angelegt, aus dem bei Bedarf ein Speicherblock entnommen werden kann. Falls kein Speicherblock mehr im Pool vorhanden ist, wird das bereits vorhandene Verfahren zur Speicherbelegung benutzt. Dabei muss der insgesamt vorhandene Speicher nach einem Speicherblock abgesucht werden, der belegt und zur Verfügung gestellt werden kann. Die Anzahl der für den Pool belegten Speicherblöcke wird bei jeder Initialisierung des Computersystems abhängig von der Anzahl der Anforderungen an Speicherblöcken gewählt.

Dabei ist von Nachteil, dass so lange, wie Speicherblöcke im Pool vorhanden sind, bei einer Speicheranforderung mindestens ein Speicherblock aus dem Pool entnommen wird. Sobald kein Speicherblock mehr im Pool ist, muss der vorhandene physikalische Speicher nach einem freien Speicherblock durchsucht werden, was relativ lange dauern kann. Dies geschieht unabhängig davon, ob für einen Programmteil, der in Echtzeit abgearbeitet werden muss oder für einen nicht so zeitkritischen Programmteil Speicher benötigt wird.

Aus der US 5,930,141 ist ein Verfahren für einen Speicherzugriff bekannt, das keinen nachteiligen Einfluss auf die Abarbeitung eines NC-Programms haben soll. Es steht ein erster und ein zweiter Speicher zur Verfügung, wobei die Zugriffszeit auf den zweiten Speicher länger ist als auf den ersten Speicher. Das NC-Programm ist im ersten Speicher gespeichert. NC-Programmblöcke werden in solche, deren Abarbeitung warten kann und solche, deren Abarbeitung nicht warten kann, unterteilt. Sobald während der Abarbeitung des NC-Programms ein Zugriff auf den zweiten Speicher erfolgen soll, wird überprüft, ob die nächst auszuführende Anweisung des nächsten Programmblocks des NC-Programms aus einem Programmblock stammt, der warten kann. Dann wird der Zugriff auf den Speicher vor der Anweisung im nächsten Programmblock ausgeführt. Wenn die Anweisung im nächsten Programmblock des NC-Programms nicht warten kann, wird der nächste Programmblock unmittelbar anschließend ausgeführt, ohne dass vorher ein Zugriff auf den Speicher erfolgt.

Dabei ist von Nachteil, dass hier lediglich ein Speicherzugriff auf einen langsameren Speicher erfolgt, aber keine Zuweisung von Speicher. Ein weiterer Nachteil ist, dass ein Programmblock nur eine Anweisung enthält. Dadurch muss jeder einzelnen Anweisung eine Kennung hinzugefügt werden, ob die Anweisung warten darf oder nicht und diese Kennung muss während der Abarbeitung des Programms überprüft werden. Ein weiterer Nachteil besteht darin, dass ein Speicherzugriff, unabhängig wie wichtig dieser ist, eventuell nicht ausgeführt wird und dadurch eine nicht unerhebliche Verzögerung entstehen kann.

Auch bei dem Verfahren gemäß der WO 00/05652 A1 ist den Programmteilen jeweils eine Kennung hinzugefügt, die direkt angibt, nach welcher Methode auf einen Speicher zugegriffen werden muss. Der für den Zugriff reservierte Speicherbereich für die Echtzeitbearbeitung ist vorab festgelegt und für diesen Bereich erfolgt keine dynamische Zuweisung von Speicher. Somit ist nicht gewährleistet, dass für die Echtzeitbearbeitung immer ausreichend reservierter Speicher zur Verfügung steht.

Es ist daher die Aufgabe der vorliegenden Erfindung ein Verfahren für eine dynamische Speicherverwaltung anzugeben, bei dem für Programmteile, die in Echtzeit abgearbeitet werden müssen, möglichst schnell, zumindest innerhalb einer definierten maximalen Zeitdauer, Speicherplatz zur Verfügung gestellt wird, ohne dass dabei unnötig viel Speicherplatz in einem Speicher-pool reserviert werden muss. Ausserdem soll dieses Verfahren nicht zu wesentlichen Verzögerungen bei der Abarbeitung des Programms führen.

Diese Aufgabe wird durch ein Verfahren mit den im Anspruch 1 angegebenen Merkmalen gelöst.

Weiterbildungen und vorteilhafte Ausgestaltungen des erfindungsgemäßen Verfahrens sind den jeweils abhängigen Ansprüchen zu entnehmen.

Das erfindungsgemäße Verfahren weist den Vorteil auf, dass unterschieden wird zwischen Programmteilen, die in Echtzeit abgearbeitet werden müssen und denen daher auch besonders schnell Speicherplatz zugewiesen werden muss und Programmteilen, die nicht in Echtzeit abgearbeitet werden müssen und denen daher nicht so schnell Speicherplatz zugewiesen werden muss. Dafür wird erfindungsgemäß die Priorität des Programmteils ausgewertet, von dem die Speicheranforderung kommt. Dadurch müssen nur für Programmteile, die in Echtzeit abgearbeitet werden müssen und die daher eine Mindestpriorität aufweisen, Speicherabschnitte in einem Pool bevorratet werden, was den für eine Speicheranforderung im Pool zu bevorratenden Speicherplatz verringert. Für Programmteile, die eine Speicheranforderung senden und die eine niedrigere Priorität haben, so dass sie nicht in Echtzeit abgearbeitet werden, wird der freie Speicher nach einem passenden Speicherbereich durchsucht. Weiterhin vorteilhaft ist, dass nicht jeder einzelnen Programmanweisung eine eigene Priorität zugewiesen wird, sondern ganzen Programmteilen, die aus mehreren Programmanweisungen bestehen. Da einzelne Programmanweisungen meist ohnehin keine vollständige Funktion ausführen, muss ohnehin meist mehreren unmittelbar aufeinander folgenden Programmanweisungen die gleiche Priorität zugewiesen werden. Indem Programmteilen eine Priorität zugewiesen wird, muss wesentlich seltener überprüft werden, welche Priorität gerade vorliegt. Dadurch wird die Programmabarbeitung beschleunigt.

Die Erfindung wird im folgenden anhand der in der Zeichnung dargestellten Ausführungsformen näher erläutert. Die Figuren zeigen:
- Fig. 1:: eine mögliche Vorgehensweise zur erfindungsgemäßen Speicherzuweisung bei Echtzeit und Nicht-Echtzeit Priorität eines anfordernden Programmteils und
- Fig. 2:: eine erste und zweite Verfahrensweise zur Speicherbelegung.

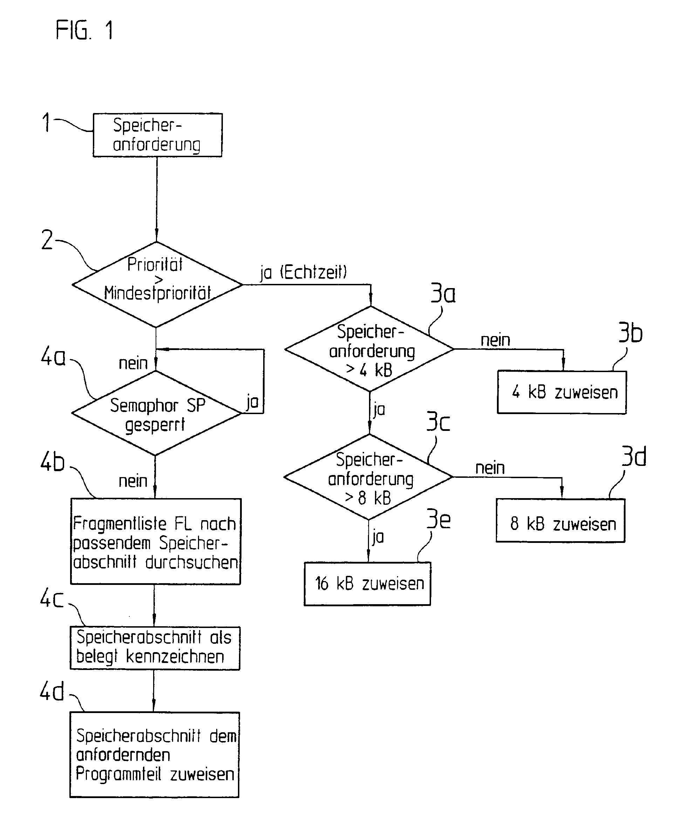

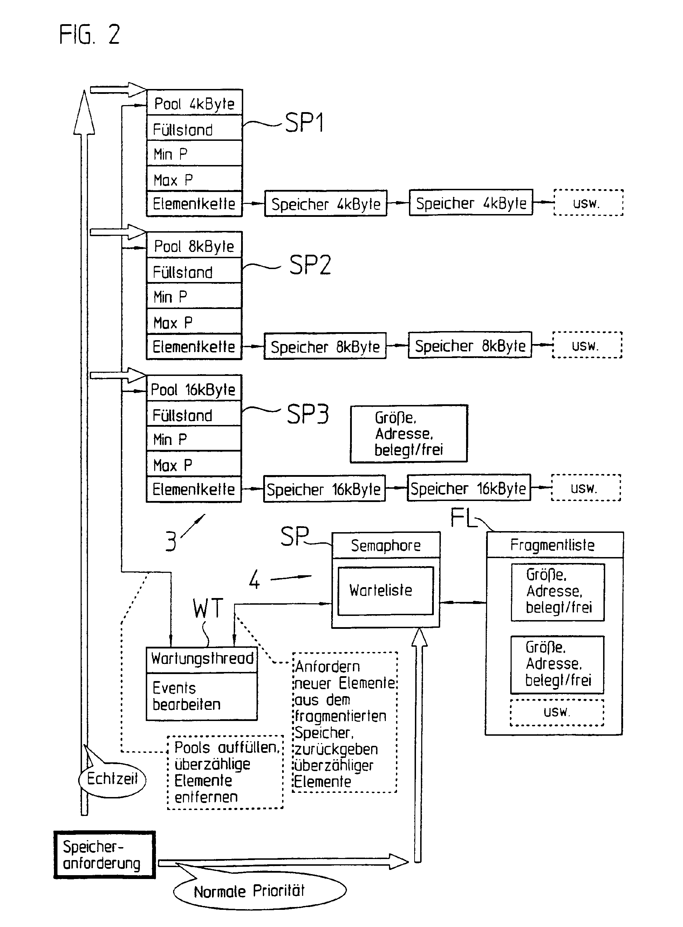

Liegt, wie in Fig. 1 dargestellt, bei der Abarbeitung eines NC-Programms einer NC-Steuerung eine Anforderung 1 von Arbeitsspeicher des Prozessors durch ein NC-Programmteil vor, wird in Schritt 2 unterschieden, welche Priorität das den Speicher anfordernde Programmteil aufweist. Dadurch kann für Programmteile, die Echtzeit-Priorität haben, eine besonders schnelle Zuweisung von Arbeitsspeicher realisiert werden, ohne dass unnötig viel Arbeitsspeicher belegt werden muss. Entspricht die Priorität mindestens einer Mindestpriorität, so arbeitet das Programmteil in Echtzeit und muss auch den angeforderten Speicher gemäß einer ersten Verfahrensweise 3 in Echtzeit zugewiesen bekommen. Dies geschieht dadurch, dass in den Schritten 3a und 3c ermittelt wird, wieviel Speicher angefordert wurde und dann wird aus einem vorher belegten bzw. für Echtzeitanwendungen reservierten Speicher-Pool SP1 (Figur 2) in Schritt 3b ein 4 kByte großer Speicherabschnitt zugewiesen, bzw. ein 8 kByte großer in Schritt 3d aus Speicher-Pool SP2 bzw. ein 16 kByte großer in Schritt 3e aus Speicher-Pool SP3. Sollte ein noch größerer Speicherabschnitt angefordert worden sein, wird eine Fehlermeldung ausgegeben, da davon ausgegangen wird, dass keine größeren Speicherabschnitte als 16 kByte benötigt werden. Um die gesetzten Echtzeitbedingungen zu erfüllen, wird keine nicht-echtzeitfähige Methode zur Speicherzuweisung benutzt, da diese zu langsam wäre. Weiterhin ist dafür sicherzustellen, dass die Speicher-Pools SP1 - SP3 immer ausreichend Speicherabschnitte vorrätig haben.

Ist die Priorität eines Speicher anfordernden Programmteils kleiner einer Mindestpriorität, arbeitet das Programmteil nicht in Echtzeit und die Speicherzuweisung wird gemäß einer zweiten Verfahrensweise 4 nicht in Echtzeit abgearbeitet. Dafür wird in Schritt 4a zunächst überprüft, ob durch einen Semaphor Sp der Zugriff auf eine Fragmentliste FL, in die alle belegten und nicht belegten Speicherbereiche eingetragen sind, gesperrt ist. Ist dies nicht der Fall, wird die Fragmentliste FL nach einem zur Speicheranforderung passenden Speicherabschnitt durchsucht, ansonsten wird gewartet, bis die Fragmentliste FL für einen Zugriff freigegeben wird. Während einem Zugriff wird die Fragmentliste FL mittels des Semaphoren Sp für weitere Zugriffe gesperrt. Wurde ein passender Speicherabschnitt gefunden, wird dieser in Schritt 4c in der Fragmentliste FL als durch den anfordernden Programmteil belegt gekennzeichnet und im Schritt 4d dem anfordernden Programmteil zugewiesen. Anschließend wird mittels des Semaphoren Sp die Fragmentliste FL wieder für einen Zugriff freigegeben.

In Fig. 2 ist eine mögliche Realisierung der erfindungsgemäßen Speicherverwaltung dargestellt. Für den Fall, dass das Programmteil, das Speicher anfordert, in Echtzeit arbeitet, wird gemäß einer ersten Verfahrensweise 3 aus einem Speicher-Pool SP1 ein vorher für diesen Pool SP1 reservierter Speicherabschnitt, der mindestens so groß ist wie der angeforderte Speicher, dem Programmteil zugewiesen. Beim Zuweisen und Freigeben ist kein Belegen der Semaphore SP nötig, da ein belegtes Element und damit auch seine Verwaltungsinformation der Fragmentliste FL nicht von anderer Seite verändert werden kann.

Vorteilhafterweise sind mehrere Speicher-Pools SP1 - SP3 vorgesehen, die jeweils Speicherabschnitte gleicher Größe beinhalten. Beispielsweise sind in einem ersten Speicher-Pool SP1 Speicherabschnitte mit einer ersten Größe von 4kByte, in einem zweiten Speicher-Pool SP2 Speicherabschnitte mit einer zweiten Größe von 8 kByte und in einem dritten Speicher-Pool SP3 Speicherabschnitte mit einer dritten Größe von 16 kByte reserviert werden. Die Größe wird also immer verdoppelt. Die Größen der Speicherabschnitte in den Speicher-Pools SP1 - SP3 werden derart gewählt, dass einerseits nicht unnötig viel Speicherplatz verschwendet wird, indem beispielsweise für eine Anforderung über 3 kByte ein 16 kByte Speicherabschnitt zugewiesen werden muss, weil kleinere Speicherabschnitte nicht zur Verfügung stehen. Andererseits wird die Größe der Speicherabschnitte so gewählt, damit für eine Speicheranforderung nicht mehrere Speicherblöcke zugewiesen werden müssen, wenn beispielsweise 10 kByte angefordert werden und dann ein Block mit 64 kByte zugewiesen werden muss, weil 16 kByte Speicherabschnitte nicht zur Verfügung stehen.

Jeder Speicher-Pool SP1 - SP3 enthält Informationen über die aktuelle Speicherkapazität, insbesondere weist er einen bestimmten Füllstand auf, der angibt, wieviele Speicherabschnitte im Speicher-Pool SP1 - SP3 reserviert sind. Weiterhin ist jedem Speicher-Pool SP1 - SP3 ein Mindestfüllstand MinP und ein Maximalfüllstand MaxP zugeordnet. Durch den Mindestfüllstand MinP wird angegeben, ab welchem Füllstand ein Wartungsthread WT aktiviert wird, um neue Speicherabschnitte für den jeweiligen Speicher-Pool SP1 - SP3 zu belegen. Durch den Maximalfüllstand MaxP wird angegeben, ab welchem Füllstand ein Wartungsthread WT aktiviert wird, damit überflüssige Speicherabschnitte aus dem Speicher-Pool SP1 - SP3 entfernt und damit Speicher für andere Zwecke freigeben wird. Weiterhin ist jedem Speicher-Pool SP1 - SP3 ein Verweis auf den ersten Speicherabschnitt in der Liste der im jeweiligen Speicher-Pool SP1 - SP3 vorhandenen Speicherabschnitte vorgesehen. Jeder Speicherabschnitt beinhaltet einen Verweis auf den nächstfolgenden Speicherabschnitt des Speicher-Pools SP1 - SP3, so dass die Speicherabschnitte jedes Speicher-Pools SP1 - SP3 als verkettete Liste aufeinander verweisen, wie dies in Fig. 2 dargestellt wird.

Stellt der Wartungsthread WT fest, dass der Mindestfüllstand MinP um einen Mindestwert, beispielsweise mindestens 50%, unterschritten wurde, wird der Mindestfüllstand MinP um den Wert erhöht, um den dieser Mindestwert des Mindestfüllstands MinP unterschritten wurde. Der Maximalfüllstand MaxP wird als ein bestimmtes Vielfaches, beispielsweise das Doppelte, des Mindestfüllstands MinP definiert und entsprechend an den neuen Wert für den Mindestfüllstand MinP angepasst.

Aufgrund der von Programmteilen eingehenden Anforderungen an Speicher kann ermittelt werden, welche Größe der Speicherabschnitte wie häufig benötigt wird. Aufgrund der Vorgaben moderner Computersysteme ist es außerdem vorteilhaft mindestens 4 kByte in einem Block zu adressieren. Die Anforderungen an Speicher werden daher abhängig von der Größe des benötigten Speicherabschnitts in Gruppen eingeteilt, die sich in der Größe um ganzzahlige Vielfache von 4 kByte unterscheiden.

Abhängig von der relativen Häufigkeit der Anforderungen in diesen Gruppen kann dann die Anzahl der Speicher-Pools SP1 - SP3, der Mindestfüllstand und der Maximalfüllstand in jedem Speicher-Pool SP1 - SP3 und die Größe der Speicherabschnitte in den Speicher-Pools SP1 - SP3 festgelegt werden. Die derart ermittelten Werte können für jeden Speicher-Pool SP1 - SP3 in einem nicht-flüchtigen Speicher abgelegt und beim nächsten Start des Programms berücksichtigt werden. Derart werden Kenngrößen für die Speicherverwaltung adaptiv eingestellt und optimieren sich selbst. Zusätzlich kann für jeden Speicher-Pool SP1 - SP3 ein nicht-flüchtiger Speicher vorgesehen sein, in dem das absolute Minimum des Füllstands des jeweiligen Speicher-Pools SP1 - SP3 gespeichert wird. Durch Auslesen dieses Speichers können auch Minimalfüllstände der Speicher-Pools SP1 - SP3 erkannt werden, die während Echtzeitbearbeitungen auftreten, während denen der Wartungsthread WT keinen Zugriff auf den Füllstand der Speicher-Pools SP1 - SP3 hat.

Der Wartungsthread WT erhält vorteilhaft eine Priorität, die unmittelbar unterhalb des Schwellwerts für Echtzeitbearbeitung liegt. Dadurch wird sichergestellt, dass unmittelbar nach Beendigung von Programmteilen, die in Echtzeit abgearbeitet werden, überprüft wird, ob die Anzahl Speicherabschnitte in den Speicherpools SP1 - SP3 noch oberhalb des Mindestfüllstands MinP liegt und evtl. während der Programmabarbeitung in Echtzeit auch immer lag.

Für den Fall, dass das Programmteil, welches Speicher anfordert, nicht in Echtzeit arbeitet, weil die Priorität des Programmteil kleiner als die Mindestpriorität für Echtzeit ist, wird eine zweite Verfahrensweise angewendet, um Speicher zuzuweisen. Es wird vom Wartungsthread WT zunächst ein Semaphor Sp überprüft. Dieser Semaphor Sp gibt an, ob eine Fragmentliste FL für Speicher gerade benutzt wird. In einer derartigen Fragmentliste FL sind zu jedem Speicherbereich des physikalischen Speichers zumindest dessen Größe, Startadresse und sein Belegungszustand (frei bzw. belegt) gespeichert.

Wird die Fragmentliste FL gerade benutzt, muss der Wartungsthread so lange warten, bis die Fragmentliste FL wieder frei ist, was an dem Semaphor SP erkannt wird. Dann sucht der Wartungsthread WT aus der Fragmentliste FL einen freien Speicherbereich, der mindestens die angeforderte Größe aufweist. Die benötigte Größe Speicher wird für den anfordernden Programmteil belegt und dem anfordernden Programmteil zugewiesen.

Eine Alternative für die Zuweisung von Speicherbereichen in Echtzeit gemäß einer ersten Vorgehensweise besteht darin, dass nur ein einziger Speicher-Pool vorgesehen ist, der Speicherabschnitte einer Mindestgröße von beispielsweise 4kByte beinhaltet. Weiterhin ist ein Speichermanager vorgesehen, der logische in physikalische Adressen und umgekehrt umcodiert. Dann werden bei einer Speicheranforderung in Echtzeit aus dem Speicher-Pool so viele Speicherabschnitte entnommen und durch den Speichermanager mit unmittelbar aufeinander folgenden Adressen versehen, bis die angeforderte Speichergröße mindestens erreicht ist und der derart zusammengesetzte Speicherbereich dem anfordernden Programmteil zugewiesen.

Werden also beispielsweise 10 kByte Speicher von einem Programmteil mit einer Mindestpriorität für Echtzeit angefordert, werden aus einem Speicher-Pool mit 4 kByte großen Speicherabschnitten die ersten drei Speicherabschnitte der verketteten Liste ausgewählt. Diese Speicherabschnitte können im zur Verfügung stehenden physikalischen Speicher beliebig angeordnet sein, insbesondere nicht unmittelbar aufeinander folgend. Durch den Speichermanager erfolgt eine Umcodierung von logischen Adressen in physikalische Adressen und umgekehrt bei diesen drei Speicherabschnitte derart, dass die logischen Adressen der drei Speicherabschnitte unmittelbar aufeinander folgen. Dadurch wird ein zusammenhängender Adressraum für den angeforderten Speicherbereich zusammengesetzt und kann dem anfordernden Programm als ein zusammenhängender Speicherbereich zugewiesen werden.

Dies weist den Vorteil auf, dass beliebig große Speicherbereiche zugewiesen werden können und man nicht auf die in den Speicher-Pools vorhandenen Größen der Speicherabschnitte beschränkt ist.

Für die Rückgabe von Speicher, den das Programm nicht mehr benötigt bestehen zwei Realisierungsmöglichkeiten. Es können die nicht mehr benötigten Speicherbereiche wieder in die Speicher-Pools SP1 - SP3 zurückgestellt werden. Dafür wird in der Fragmentliste FL überprüft, welche Größe der vom Programm zurückgegebene Speicherbereich aufweist. Anschließend wird dieser Speicherabschnitt in der Fragmentliste FL als reserviert gekennzeichnet und in die verkettete Liste des passenden Speicher-Pools eingehängt. Sollte der Füllstand des Speicher-Pools dann die Maximalgröße MaxP überschreiten, werden Speicherabschnitte durch den Wartungsthread WT aus der verketteten Liste entfernt und in der Fragmentliste FL als frei gekennzeichnet.

Alternativ dazu können Speicherbereiche, die vom Programm nicht mehr benötigt werden in eine separate Liste eingetragen werden. Die in dieser Liste eingetragenen Speicherbereich kennzeichnet der Wartungsthread dann unmittelbar in der Fragmentliste FL als frei. Dadurch muss nicht festgestellt werden, welche Länge die nicht mehr benötigten Speicherbereiche aufweisen und die Eintragung in einen Speicher-Pool entfällt, was zu einer schnelleren Freigabe führt. Ein weiterer Vorteil besteht darin, dass derart auch Speicherbereiche freigegeben werden können, für deren Größe kein Speicher-Pool existiert.

## Patentansprüche

1. Verfahren zur dynamischen Speicherverwaltung bei dem einem anfordernden Programmteil nach einer ersten Verfahrensweise (3) ein Speicherbereich zugewiesen wird oder bei dem einem anfordernden Programmteil nach einer zweiten Verfahrensweise (4) ein Speicherbereich zugewiesen wird, **dadurch gekennzeichnet, dass**
- aufgrund einer dem anfordernden Programmteil zugewiesenen Priorität entschieden wird, ob in einer ersten Verfahrensweise (3) ein Speicherbereich in Echtzeit zugewiesen wird oder ob in einer zweiten Verfahrensweise (4) ein Speicherbereich nicht in Echtzeit zugewiesen wird;
- ermittelt wird, wieviel Speicher angefordert wurde;
- dem anfordernden Programmteil in der ersten Verfahrensweise (3) zumindest ein Speicherabschnitt aus mehreren für Echtzeitanwendungen reservierten Speicherabschnitten zumindest eines Speicherpools (SP1-SP3) als Speicherbereich zugewiesen wird,
wobei dieser zugewiesene Speicherbereich mindestens so groß ist wie der angeforderte Speicher, und
- ein Speicherpool (SP1-SP3) abhängig vom Füllstand dieses Speicherpools (SP1-SP3) mittels eines Wartungsthreads (WT) mit freien Speicherabschnitten aufgefüllt wird und diese Speicherabschnitte für Echtzeitanwendungen reserviert werden.

2. Verfahren nach Anspruch 1, **dadurch gekennzeichnet, dass** Speicher-Pools (SP1-SP3) mit Speicherabschnitten unterschiedlicher Größe zur Verfügung gestellt werden, und dass bei der ersten Verfahrensweise (3) einer dieser vorher belegten Speicherabschnitte abhängig von der Größe des angeforderten Speicherbereichs ausgewählt und dem anfordernden Programmteil zugewiesen wird.

3. Verfahren nach Anspruch 1, **dadurch gekennzeichnet, dass** bei der ersten Verfahrensweise mehrere vorher belegte Speicherabschnitte aus einem Speicher-Pool (SP1-SP3) entnommen werden, die physikalischen Adressräume dieser Speicherabschnitte zu einem kontinuierlichen logischen Adressraum umcodiert und der derart gebildete Speicherbereich einem anfordernden Programmteil zugewiesen wird.

4. Verfahren nach einem der vorhergehenden Ansprüche, **dadurch gekennzeichnet, dass** bei der zweiten Verfahrensweise ein freier Speicherbereich, der mindestens eine vom Programmteil angeforderte Größe aufweist, aus einer Fragmentliste (FL), in die alle belegten und freien Speicherbereiche eingetragen sind, gesucht und ausgewählt und dem anfordernden Programmteil zugewiesen wird.

5. Verfahren nach einem der vorhergehenden Ansprüche, **dadurch gekennzeichnet, dass** die freien Speicherabschnitte nach der zweiten Verfahrensweise ermittelt werden und der Wartungsthread (WT) die Speicherpools (SP1 - SP3) entleert, indem reservierte Speicherabschnitte der Speicherpools (SP1 - SP3) freigegeben werden.

6. Verfahren nach einem der vorhergehenden Ansprüche, **dadurch gekennzeichnet, dass** die Priorität des Wartungsthreads (WT) unmittelbar unterhalb der Mindestpriorität für Echtzeitverarbeitung liegt.

7. Verfahren nach einem der vorhergehenden Ansprüche, **dadurch gekennzeichnet, dass** für einen Speicherpool (SP1 - SP3) eine bestimmte Anzahl Speicherabschnitte reserviert werden, wenn der Mindestfüllstand (MinP) unterschritten wurde und ein Speicherpool (SP1 - SP3) bis zu einem Maximalfüllstand (MaxP) entleert wird, wenn der Maximalfüllstand (MaxP) überschritten wurde.

8. Verfahren nach einem der vorhergehenden Ansprüche, **dadurch gekennzeichnet, dass** der Mindestfüllstand (MinP) für einen Speicherpool (SP1 - SP3) um den Wert erhöht wird, um den der Mindestfüllstand (MinP) während der Programmabarbeitung in Echtzeit unterschritten wurde oder einen dazu proportionalen Wert und dass der Maximalfüllstand (MaxP) dann neu auf ein bestimmtes Vielfaches des Mindestfüllstands (MinP) festgelegt wird.

9. Verfahren nach einem der Ansprüche 4 bis 8, **dadurch gekennzeichnet, dass** in der Fragmentliste (FL) für jeden Speicherbereich zumindest dessen Größe, dessen Startadresse und dessen Belegungszustand gespeichert ist, wobei sich unterschiedliche Speicherabschnitte unterscheiden durch ihren Belegungszustand und durch den Programmteil, durch den sie belegt werden.

10. Verfahren nach einem der Ansprüche 4 bis 9, **dadurch gekennzeichnet, dass** ein Zugriff auf die Fragmentliste (FL) durch ein Semaphor (Sp) gesteuert wird, indem der Zugriff gesperrt oder frei ist.

11. Verfahren nach einem der vorhergehenden Ansprüche, **dadurch gekennzeichnet, dass** aufgrund von Speicher-Anforderungen relative Häufigkeiten ermittelt werden zumindest für die Größe der angeforderten Speicherabschnitte, die Mindestfüllstände und Maximalfüllstände der Speicherpools (SP1 - SP3), dass diese dazu benutzt werden, um für die Anzahl der Speicherpools (SP1 - SP3), die Größe der Speicherabschnitte, die Mindestfüllstände und Maximalfüllstände der Speicherpools (SP1 - SP3) Erwartungswerte zu ermitteln und dass diese Erwartungswerte gespeichert und bei einem Neustart zur Speicherverwaltung benutzt werden.

12. Verfahren nach einem der vorhergehenden Ansprüche, **dadurch gekennzeichnet, dass** bei nicht mehr von einem Programmteil benötigten Speicherbereichen deren Größe ermittelt wird und diese Speicherbereiche in einen Speicherpool (SP1 - SP3) gleicher Größe eingefügt werden oder dass nicht mehr benötigte Speicherbereiche in eine Liste eingefügt werden und der Wartungsthread (WT) die Speicherbereiche dieser Liste als frei kennzeichnet.

13. Verfahren nach einem der vorhergehenden Ansprüche, **dadurch gekennzeichnet, dass** das absolute Minimum des Füllstandes eines Speicher-Pools (SP1 - SP3) während der Abarbeitung einer oder mehrerer Programmteile in Echtzeit gespeichert, anschließend vom Wartungsthread (WT) ausgelesen und bei der Überprüfung, ob der Mindestfüllstand (MinP) unterschritten wurde, als Füllstand berücksichtigt wird.

## Claims

1. Method for dynamic memory management in which a memory region is allocated to a requesting program part according to a first operating mode (3) or in which a memory region is allocated to a requesting program part according to a second operating mode (4), **characterised in that**
- it is decided on the basis of a priority allocated to the requesting program part whether a memory region is allocated in real time in a first operating mode (3) or whether a memory region is allocated not in real time in a second operating mode (4);
- it is determined how much memory was requested;
- at least one memory portion comprising a plurality of memory portions, reserved for real time applications, of at least one memory pool (SP1 - SP3) is allocated as memory region to the requesting program part in the first operating mode (3), this allocated memory region being at least as large as the requested memory, and
- a memory pool (SP1 - SP3) is filled with free memory portions as a function of the fill level of this memory pool (SP1 - SP3) by means of a maintenance thread (WT) and these memory portions are reserved for real time applications.

2. Method according to claim 1, **characterised in that** memory pools (SP1 - SP3) with memory portions of different sizes are made available, and **in that**, in the first operating mode (3), one of these previously occupied memory portions is selected as a function of the size of the requested memory region and allocated to the requesting program part.

3. Method according to claim 1, **characterised in that**, in the first operating mode, a plurality of previously occupied memory portions are removed from a memory pool (SP1 - SP3), the physical address spaces of these memory portions are recoded to form a continuous logic address space and the thus formed memory region is allocated to a requesting program part.

4. Method according to one of the preceding claims, **characterised in that**, in the second operating mode, a free memory region which has at least a size requested by the program part, is sought and selected from a fragment list (FL) into which all the occupied and free memory regions are entered and is allocated to the requesting program part.

5. Method according to one of the preceding claims, **characterised in that** the free memory portions are determined according to the second operating mode and the maintenance thread (WT) empties the memory pools (SP1 - SP3) **in that** reserved memory portions of the memory pools (SP1 - SP3) are freed.

6. Method according to one of the preceding claims, **characterised in that** the priority of the maintenance thread (WT) is directly below the lowest priority for real time processing.

7. Method according to one of the preceding claims, **characterised in that** a specific number of memory portions are reserved for one memory pool (SP1 - SP3) when the minimum fill level (MinP) has been fallen below and a memory pool (SP1 - SP3) is emptied up to a maximum fill level (MaxP) when the maximum fill level (MaxP) has been exceeded.

8. Method according to one of the preceding claims, **characterised in that** the minimum fill level (MinP) for one memory pool (SP1 - SP3) is increased by the value by which the minimum fill level (MinP) was fallen below during the program run in real time or by a value proportional thereto and **in that** the maximum fill level (MaxP) is then established again at a specific multiple of the minimum fill level (MinP).

9. Method according to one of the claims 4 to 8, **characterised in that**, in the fragment list (FL) for each memory region, at least the size thereof, the start address thereof and the occupation state thereof is stored, different storage portions being differentiated by their occupation state and by the program part with which they are occupied.

10. Method according to one of the claims 4 to 9, **characterised in that** access to the fragment list (FL) is controlled by a semaphore (Sp) **in that** access is blocked or available.

11. Method according to one of the preceding claims, **characterised in that** relative frequencies are determined on the basis of memory requests at least for the size of the requested memory portions, the minimum fill levels and maximum fill levels of the memory pools (SP1 - SP3), **in that** these are used to determine expected values for the number of memory pools (SP1 - SP3), the size of the memory portions, the minimum fill levels and maximum fill levels of the memory pools (SP1 - SP3) and **in that** these expected values are stored and used for memory management during a new start.

12. Method according to one of the preceding claims, **characterised in that**, when memory regions are no longer required by a program part, the size thereof is determined and these memory regions are entered in a memory pool (SP1 - SP3) of the same size or **in that** no longer required memory regions are entered in a list and the maintenance thread (WT) characterises the memory regions of this list as available.

13. Method according to one of the preceding claims, **characterised in that** the absolute minimum of the fill level of a memory pool (SP1 - SP3) during running of one or more program parts is stored in real time, subsequently read out by the maintenance thread (WT) and, during the test as to whether the minimum fill level (MinP) has been fallen below, is taken into account as fill level.

## Revendications

1. Procédé de gestion dynamique de mémoire, selon lequel à une partie de programme qui en fait la demande est attribuée une zone de mémoire selon un premier mode de procédure ou à une partie de programme qui en fait la demande est attribuée une zone de mémoire selon un second mode de procédure (4), ce procédé étant **caractérisé en ce que**
- sur la base d'une priorité attribuée à la partie de programme qui en fait la demande, il est décidé si dans un premier mode de procédure (3) une zone de mémoire est attribuée en temps réel ou si dans un second mode de procédure (4) une zone de mémoire n'est pas attribuée en temps réel,
- il est établi combien de mémoires ont été demandées,
- à la partie de programme qui en fait la demande, il est attribué dans le premier mode de procédure en tant que zone de mémoire au moins un segment de mémoire constitué de plusieurs segments de mémoire réservés pour des applications en temps réel appartenant à au moins un pool de mémoires (SP1-SP3), cette zone attribuée étant au moins aussi grande que la mémoire demandée,
- ce pool de mémoires (SP1-SP3), indépendamment de son niveau de remplissage, est rempli, par l'intermédiaire d'un poste de maintenance (WT), de segments de mémoire libres et ces segments sont réservés à des applications en temps réel.

2. Procédé selon la revendication 1, **caractérisé en ce que** des pools de mémoires (SP1-SP3) avec des segments de mémoire de différentes grandeurs sont mis à disposition et selon le premier mode de procédure (3), un de ces segments qiu sont d'abord occupés est sélectionné en fonction de la grandeur de la zone de mémoire demandée, et il est attribué à la partie de programme qui le demande.

3. Procédé selon la revendication 1, **caractérisé en ce que** selon le premier mode procédural plusieurs segments de mémoire qui sont d'abord occupés sont retirés d'un pool de mémoires (SP1-SP3), les espaces physiques d'adresse de ces segments sont recodés pour donner un espace d'adresse logique continu et la zone de mémoire ainsi formée est attribuée à une partie de programme qui en fait la demande.

4. Procédé selon une des revendications précédentes, **caractérisé en ce que** selon le second mode de procédure, une zone de mémoire libre présentant au moins la grandeur demandée par la partie de programme, est recherchée et sélectionnée dans une liste de fragments (FL) qui comporte toutes les zones de mémoire occupées et libres, et cette zone de mémoire est attribuée à la partie de programme qui en fait la demande.

5. Procédé selon une des revendications principales, **caractérisé en ce que** les segments de mémoire libres sont établis selon le second mode de procédure et le poste de maintenance (WT) vide les pools de mémoires (SP1-SP3), avec libération de segments de mémoire réservés de ces pools de mémoires (SP1-SP3).

6. Procédé selon une des revendications précédentes, **caractérisé en ce que** la priorité du poste de maintenance (WT) est directement en dessous de la priorité minimale pour le traitement en temps réel .

7. Procédé selon une des revendications précédentes, **caractérisé en ce que** pour un pool de mémoires (SP1-SP3) est réservé un certain nombre de segments de mémoire si le niveau de remplissage minimal (MinP) a été dépassé vers le bas, tandis qu'un pool de mémoires (SP1-SP3) est vidé jusqu'à un remplissage maximal (MaxP) si ce niveau a été dépassé vers le haut.

8. Procédé selon une des revendications précédentes, **caractérisé en ce que** le niveau minimal de remplissage (MinP) pour un pool de mémoires (SP1-SP3) est augmenté de la valeur de laquelle pendant le déroulement de programme en temps réel, ce niveau a été dépassé vers le bas, ou d'une valeur proportionnelle à celle-ci, et le niveau de remplissage maximal (MaxP) est alors fixé à nouveau, à un multiple défini du niveau de remplissage minimal (MinP).

9. Procédé selon une des revendications 4 à 8, **caractérisé en ce que** dans la liste des fragments (FL) est enregistré pour chaque zone de mémoire au moins 1a grandeur, l'adresse de départ et l'état d'occupation de cette zone, les divers segments de mémoire se différenciant par leur état d'occupation et par la partie de programme par laquelle ils sont mis dans cet état.

10. Procédé selon une des revendications 4 à 9, **caractérisé en ce qu'**un accès à la liste des fragments (FL) est commandé par un sémaphore (Sp), cet accès étant bloqué ou libre.

11. Procédé selon une des revendications précédentes, **caractérisé en ce que** sur la base de demandes de mémoire, sont établies des fréquences relatives au moins en ce qui concerne la grandeur des segments de mémoire appelés, les niveaux minimal et maximal de remplissage du pool de mémoires (SP1-SP3), et ces fréquences sont utilisés pour établir des espérances mathématiques en ce qui concerne la grandeur des segments de mémoire, les niveaux minimal et maximal de remplissage des pools de mémoires (SP1-SP3), ces espérances étant mémorisées et utilisées lors d'un nouveau départ pour la gestion de la mémoire.

12. Procédé selon une des revendications précédentes, **caractérisé en ce que** pour les zones de mémoire dont n'a plus besoin une partie de programme, leurs grandeurs sont établies et ces zones sont insérées dans un pool de mémoires (SP1-SP3) de même grandeur ou ces zones sont portées dans une liste et le poste de maintenance (WT) caractérise les zones de mémoire de cette liste comme étant libres.

13. Procédé selon une des revendications précédentes, **caractérisé en ce que** le minimum absolu du niveau de remplissage d'un pool de mémoires (SP1-SP3) pendant le déroulement d'une ou plusieurs parties de programme est enregistré en temps réel, il est ensuite lu par le poste de maintenance (WT) et pris en compte comme niveau de remplissage lors de l'examen qui détermine si le niveau minimal de remplissage (MinP) a été dépassé vers le bas.
